# EUROPÄISCHE PATENTSCHRIFT

(11) **EP 1 508 486 B1**
(45) Veröffentlichungstag und Bekanntmachung des Hinweises auf die Patenterteilung: **17.06.2009**
(21) Anmeldenummer: 03018854.4
(22) Anmeldetag: 19.08.2003
(51) Int. Cl.: B60R 21/20

(54) **Airbagmodul**
Airbag module
Module de coussin gonflable

(43) Veröffentlichungstag der Anmeldung: 23.02.2005
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE); Dietz, Peter Heinz, 42349 Wuppertal (DE); Spinozzi, Claudio, 47806 Krefeld (DE)
(74) Vertreter: Denton, Michael John

(56) Entgegenhaltungen:
- EP-A- 0 999 101
- WO-A-01/79040
- US-A- 4 944 527
- US-A- 5 791 682
- US-B1- 6 364 341

## Beschreibung

Die vorliegende Erfindung betrifft ein Luftsackmodul gemäß dem Oberbegriff des Anspruchs 1. Solch ein Luftsackmodul ist beispielsweise aus der EP 0 999 101 A1 bekannt..

Es ist auch bekannt, den Gasgenerator eines Luftsacks vollständig innerhalb des Luftsacks unterzubringen oder teilweise in den Luftsack hineinragen zu lassen. In beiden Fällen steht meist nur ein geringer Teil des Gasgeneratorgehäuses für eine Befestigung am Fahrzeug zur Verfügung. Außerdem kann es erforderlich sein, die Luftsackgeometrie im Bereich des Luftsackmundes für die Befestigung an dem Gasgenerator speziell anzupassen.

Es ist die Aufgabe der Erfindung, ein Luftsackmodul der eingangs genannten Art zu schaffen, das es mit einfacheren Mitteln ermöglicht, an einer beliebigen Stelle des Luftsacks eine abgedichtete Anbindung an den Gasgenerator zu ermöglichen, wobei gleichzeitig der ganz überwiegende Teil des Gasgeneratorgehäuses für eine Befestigung am Fahrzeug zur Verfügung stehen soll.

Die Lösung dieser Aufgabe erfolgt durch die Merkmale des Anspruchs 1.

Erfindungsgemäß wird somit der Gasgenerator mit Hilfe des Spannbandes von außen gegen den Luftsackmund gepresst, so dass im Bereich des Luftsackmundes eine abgedichtete Verbindung zwischen dem Gasaustrittsbereich des Gasgenerators und dem Luftsack geschaffen wird.

Vorteilhäfte Ausführungsformen der Erfindung sind in der Beschreibung, der Zeichnung sowie den Unteransprüchen beschrieben.

Das Spannband aus flächigem Gewebematerial kann beispielsweise beschichtet sein. Alternativ sind auch gummiartige Materialien möglich. Das Spannband kann im einfachsten Fall mit dem Luftsack so druckdicht vernäht sein, dass nach Anpressen des Spannbandes gegen den Gasaustrittsbereich des Gasgenerators eine abgedichtete Verbindung zum Inneren des Luftsackes gegeben ist. Auch ist es möglich, das Spannband mit dem Luftsack zu verkleben und/oder zu verschweißen.

Nach einer vorteilhaften Ausführungsform der Erfindung weist die Spannvorrichtung ein Umlenkelement und ein Spannelement auf. Bei dieser Ausführungsform kann mit Hilfe des Umlenkelementes das Spannband so geführt werden, dass es mit Hilfe des Spannelementes um den Gasgenerator herum gespannt werden kann. Insbesondere bei Verwendung eines im wesentlichen zylinderförmigen Gasgenerators kann es vorteilhaft sein, wenn das Umlenkelement und das Spannelement jeweils gekrümmte Schalen sind, die insbesondere eine annähernd gleiche Krümmung wie die Mantelfläche des Gasgenerators aufweisen. Ein besonders großer Spannweg kann erzielt werden, wenn das Spannelement als gekrümmte Halbschale ausgebildet wird. Ferner ist es vorteilhaft, wenn das Umlenkelement eine Durchtrittsöffnung für das Spannband aufweist. In diesem Fall kann das Spannband mit einer Schlaufe zunächst durch die Durchtrittsöffnung des Umlenkelementes geführt werden, woraufhin das Spannelement in die Schlaufe des Spannelementes eingeschoben werden kann. Wenn anschließend das Spannelement in Richtung des Umlenkelementes bzw. in Richtung des Zentrums des Gasgenerators bewegt wird, spannt sich das Spannband um den Außenumfang des Gasgenerators, wobei einerseits die Ränder der Durchtrittsöffnung des Umlenkelementes und andererseits die Außenränder des Spannelementes als Umlenkstellen dienen.

Im gespannten Zustand kann das Spannband zumindest an der Außenmantelfläche des Spannelementes anliegen. Nach einer vorteilhaften Ausführungsform sind das Spannband, das Spannelement und das Umlenkelement so dimensioniert, dass das Umlenkelement wie auch das Spannelement im gespannten Zustand möglichst nahe am Außenumfang des Gasgenerators angeordnet sind, wobei das Spannband zwischen den Bauteilen straff gespannt ist.

Nach einer weiteren vorteilhaften Ausführungsform kann das Spannelement und/oder das Umlenkelement mit Befestigungsmitteln versehen sein, um eine Befestigung an fahrzeugfesten Bauteilen zu ermöglichen. Hierdurch erhalten diese Elemente eine Doppelfunktion.

Nach einer weiteren vorteilhaften Ausführungsform weist der Gasgenerator ein oder mehrere Befestigungsbolzen auf, die insbesondere radial von dem zylindrischen Gehäuse des Gasgenerators vorstehen. Hierbei kann die Spannvorrichtung mit Hilfe des oder der Befestigungsbolzen in Richtung des Gasgenerators gespannt werden, indem beispielsweise die Spannvorrichtung mit Hilfe von auf die Befestigungsbolzen aufgeschraubten Muttern in Richtung des Gasgenerators gespannt wird.

Nach einer weiteren Ausbildung der Erfindung kann der Gasgenerator einen im Wesentlichen zylindrischen Grundkörper aufweisen, wobei sich die Spannvorrichtung über eine Länge in Längsrichtung des Grundkörpers erstreckt, die mindestens dem Durchmesser des Gasgenerators entspricht. Auf diese Weise ist sichergestellt, dass eine ordnungsgemäße Abdichtung entlang einer ausreichenden Längserstreckung erfolgt, so dass der Luftsackmund über seine gesamte Länge abgedichtet gegen den Gasgenerator gepresst wird.

Ein vorteilhaftes Verfahren zum abgedichteten Befestigen eines Gasgenerators an einem Luftsackmund ergibt sich durch den unabhängigen Verfahrensanspruch sowie die in der nachfolgenden Beschreibung beschriebenen Verfahrensmerkmale.

Nachfolgend wird die vorliegende Erfindung rein beispielhaft anhand einer vorteilhaften Ausführungsform und unter Bezugnahme auf die beigefügten Zeichnungen beschrieben. Es zeigen:
- Fig. 1: einen Querschnitt durch ein Luftsackmodul; und
- Fig. 2: eine perspektivische Explosionsdarstellung eines Luftsackmoduls.

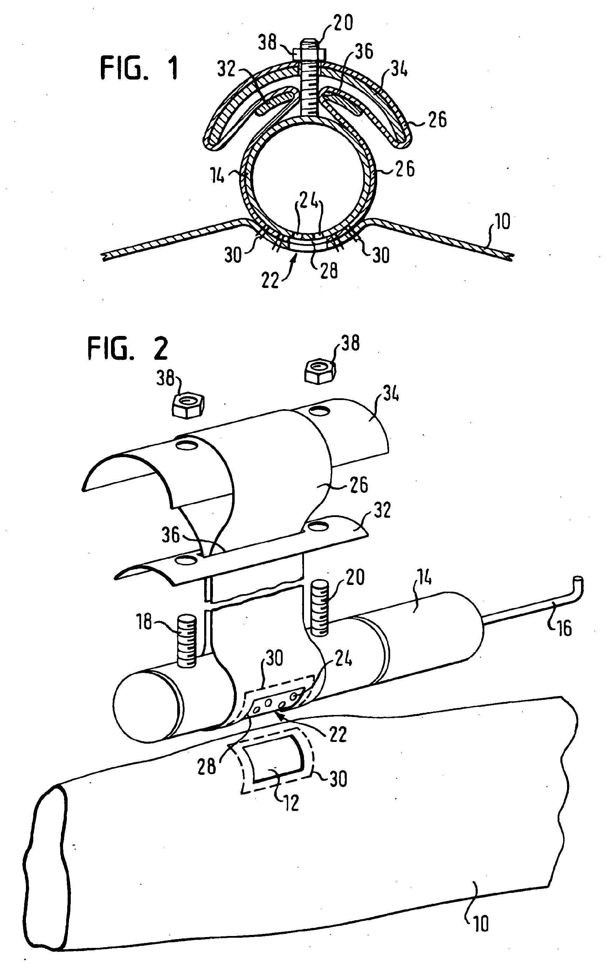

In den Fig. 1 und 2 ist ein erfindungsgemäßes Luftsackmodul dargestellt, wobei die Explosionsdarstellung von Fig. 2 zur Veranschaulichung des Zusammenbaus dient. Das in Fig. 2 dargestellte Spannband ist in Wirklichkeit wesentlich kürzer als dargestellt. Auch die Querschnittsdarstellung in Fig. 1 ist stark schematisch vereinfacht, um den Gesamtaufbau zu veranschaulichen.

Das in den Fig. 1 und 2 dargestellte Luftsackmodul weist einen schematisch dargestellten Luftsack 10 auf, der beispielsweise ein Seitenairbag eines Kraftfahrzeugs sein kann. Der Luftsack 10 ist mit einem Luftsackmund 12 versehen, wobei der Luftsackmund 12 lediglich eine Öffnung bzw. ein Schlitz im Bereich des Luftsackgewebes ist. Mit anderen Worten muss erfindungsgemäß im Bereich des Luftsackmundes keinerlei Geometrieanpassung erfolgen, um die Anbindung eines Gasgenerators zu ermöglichen.

Bei dem dargestellten Ausführungsbeispiel ist ein im Wesentlichen zylinderförmiger Gasgenerator 14 vorgesehen, der an seinem in Fig. 2 rechten Ende eine elektrische Anschlussleitung 16 und an seiner Oberseite zwei radial abstehende und parallel zueinander verlaufende Befestigungsbolzen 18, 20 aufweist. An der zu den Befestigungsbolzen 18, 20 gegenüberliegenden Umfangsseite des Gasgenerators 14 ist ein Gasaustrittsbereich 22 vorgesehen, in dem der Gasgenerator 14 mehrere Gasdurchtrittsöffnungen 24 aufweist.

Zur abgedichteten Befestigung des Luftsacks 10 an dem Gasgenerator 14 ist ein Spannband 26 vorgesehen, das als Endlosband ausgebildet sein kann, wie beim dargestellten Ausführungsbeispiel gezeigt. Alternativ kann das Spannband auch durch Vernähen eines bandförmigen Streifens gebildet sein. Das Spannband ist beim dargestellten Ausführungsbeispiel aus beschichtetem Luftsackgewebe gebildet. Alternativ kann das Spannband auch aus unbeschichtetem Luftsackgewebe, anderem Gewebe oder kunststoffartigen oder gummiartigen Materialien gebildet sein.

Im unteren Bereich des Spannbänds 26 ist eine Gasaustrittsöffnung 28 vorgesehen, deren Größe derjenigen des Luftsackmundes 12 entspricht. Auch hier kann es sich lediglich um einen Schlitz im Spannband handeln.

Um eine abgedichtete Befestigung des Luftsacks 10 an dem Gasgenerator 14 zu ermöglichen, ist das Spannband 26 mit dem Luftsack 10 in einem Umfangsbereich um die Gasaustrittsöffnung 28 bzw. um den Luftsackmund 12 vernäht, wobei die Naht in den Fig. 1 und 2 mit dem Bezugszeichen 30 angedeutet ist. In Fig. 2 ist der vernähte Zustand zwischen Luftsack 10 und Spannband 26 zur besseren Veranschaulichung nicht dargestellt.

Zur abgedichteten Befestigung des Spannbandes 26 an dem Gasgenerator 14 ist eine Spannvorrichtung vorgesehen, die ein Umlenkelement 32 und ein Spannelement 34 umfasst. Sowohl das Umlenkelement 32 wie auch das Spannelement 34 sind jeweils gekrümmte Schalen, wobei die Krümmung im Wesentlichen der Krümmung des Außenumfangs des Gasgenerators 14 entspricht. Wie insbesondere Fig. 1 zeigt, erstreckt sich jedoch die äußere Mantelfläche des Spannelementes 34 über einen etwa doppelt so großen Bogenwinkel wie die äußere Mantelfläche des Umlenkelements 32. Beide Elemente weisen jeweils zwei Bohrungen auf, so dass die Elemente 32 und 34 wie in Fig. 2 angedeutet auf die Befestigungsbolzen 18, 20 des Gasgenerators 14 aufgesteckt werden können.

Um ein Umlenken des Spannbandes 26 zu erreichen, weist das Umlenkelement 32 zwischen den beiden Bohrungen einen in Längsrichtung verlaufenden Längsschlitz 36 auf, durch den das Spannband 26 mit einer Schlaufe hindurchgeführt werden kann, so dass das Spannband 26 im wesentlichen den Bereich zwischen den beiden Befestigungsbolzen 18, 20 ausfüllt. Zum Spannen der Spannvorrichtung sind schließlich zwei Schraubmuttern 38 vorgesehen, die auf die Befestigungsbolzen 18, 20 aufgeschraubt werden können.

Zur Erleichterung der Montage kann das Umlenkelement 32 - abweichend von der dargestellten geschlossenen, ringförmigen Ausgestaltung - so ausgebildet sein, dass es zum seitlichen Einführen des Spannbandes 26 bzw. einer Schlaufe des Spannbandes geöffnet und wieder verschlossen werden kann. Ein Hindurchfädeln einer Schlaufe durch die Öffnung 36 ist dann nicht erforderlich.

Nachfolgend wird der Zusammenbau des in den Fig. 1 und 2-dargestellten Luftsackmoduls beschrieben.

Zunächst wird der eigentliche Luftsack 10 hergestellt und mit dem Luftsackmund 12 versehen, so dass das Spannband 26, das eine entsprechende Gasdurchtrittsöffnung 28 aufweist, mit der Naht 30 an einem Gewebeteil des Luftsacks 10 befestigt werden kann. Bei dem Gewebeteil kann es sich um eine Luftsacklage aber auch um einen Gasverteiler aus Gewebe handeln. Auch ist es grundsätzlich möglich, das Spannband 26 und die entsprechende Gewebelage des Luftsacks einstückig mit Hilfe von Jacquard-Technik herzustellen. Auch ein Verkleben, Verschweißen oder dergleichen vom Spannband 26 und Luftsacklage ist möglich. Auch kann im Bereich der Naht 30 ein Dichtmaterial, beispielsweise Silikon, zwischen Luftsack und Spannband eingebracht werden.

Das eine Schlaufe bildende Spannband 26 wird dann im Bereich der Schlaufe so geöffnet, dass der Gasgenerator 14 mit seinem Gasaustrittsbereich 22 in der Schlaufe so angeordnet werden kann, dass die Gasdurchtrittsöffnungen 24 oberhalb des Luftsackmundes 12 zu liegen kommen. Anschließend wird die Schlaufe des Spannbandes 26 durch den Längsschlitz 36 des Umlenkelementes 32 geführt und das Umlenkelement 32 wird auf die Befestigungsbolzen 18, 20 aufgesteckt. Anschließend wird wiederum das Spannband 26 zu einer Schlaufe geformt, so dass das Spannelement 34 in die Schlaufe eingeführt und anschließend auch auf die Befestigungsbolzen 18, 20 aufgesteckt werden kann, damit die Schraubmuttern 38 aufgeschraubt werden können.

Durch weiteres Eindrehen der Schraubmuttern 38 wird das Spannband 26 um den Gasgenerator 14 gespannt, was insbesondere in Fig. 1 gut zu erkennen ist. Da der Luftsack 10 dicht mit dem Spannband 26 verbunden ist, wird hierdurch gleichzeitig eine abgedichtete Befestigung des Luftsacks 10 am Außenumfang des Gasgenerators 14 erzielt. Hierbei ist der gesamte Umfangsbereich des Luftsackmundes 12 abgedichtet, da das Spannband 26 eine Längserstreckung aufweist, die sich in Längsrichtung entlang des gesamten Luftsackmundes erstreckt. Bei dem (nicht in Fig. 1 dargestellten) vollständig gespannten Zustand liegen sowohl das Umlenkelement 32 wie auch das Spannelement 34 nahe am Außenumfang des Gasgenerators 14 an, wobei die Außenfläche des Gasgenerators 14, das Umlenkelement 32 und das Spannelement 34 lediglich durch jeweils eine Lage des Spannbandes 26 voneinander getrennt sind.

Das erfindungsgemäße Luftsackmodul besitzt den großen Vorteil, dass die Anwendung des Gasgenerators praktisch an beliebiger Stelle des Luftsacks erfolgen kann, wobei im Bereich des Luftsacks bzw. eines gewebeartigen Gasverteilers des Luftsacks lediglich ein Luftsackmund in Form einer Gasdurchtrittsöffnung vorgesehen werden muss. Nach erfolgter Montage steht nahezu der gesamte Gehäusekörper des Gasgenerators für eine fahrzeugseitige Befestigung zur Verfügung. Auf diese Weise kann die Anbindung zwischen Gasgenerator und Luftsack frei gewählt werden, ohne dass die Geometrie des Luftsacks speziell angepasst werden muss. Außerdem kann der Luftsack auch dann von außen an einen Gasgenerator abgedichtet angekoppelt werden, wenn kein Platz für etwaige Dichtelemente zwischen Luftsack und Gasgenerator zur Verfügung steht.

Es versteht sich von selbst, dass erfindungsgemäß unter einem einen Gasaustrittsbereich aufweisenden Gasgenerator jedes Bauteil verstanden wird, das einen Gasaustrittsbereich aufweist und mit einem Gasgenerator in Verbindung steht, beispielsweise Gasführungsrohre, Gaslanzen und dergleichen.

### Bezugszeichenliste

- 10: Luftsack
- 12: Luftsackmund
- 14: Gasgenerator
- 16: Anschlussleitung
- 18, 20: Befestigungsbolzen
- 22: Gasaustrittsbereich
- 24: Gasdurchtrittsöffnungen
- 26: Spannband
- 28: Gasaustrittsöffnung
- 30: Naht
- 32: Umlenkelement
- 34: Spannelement
- 36: Längsschlitz
- 38: Schraubmuttern

## Patentansprüche

1. Luftsackmodul, umfassend
einen Luftsack (10) mit einem Luftsackmund (12); und
einen einen Gasaustrittsbereich (22) aufweisenden Gasgenerator (14), der vollständig außerhalb des Luftsacks (10) angeordnet ist, wobei der Luftsack (10) im Bereich des Luftsackmundes (12) ein Spannband (26) aufweist, das mittels einer Spannvorrichtung um den Gasgenerator (14) gespannt ist, um den Luftsackmund (12) abgedichtet gegen den Gasaustrittsbereich (22) zu drücken,
**dadurch gekennzeichnet, dass**
das Spannband (26) aus flächigem Gewebe- und/oder Kunststoffmaterial besteht, das mit dem Luftsack verbunden ist.

2. Luftsackmodul nach Anspruch 1,
**dadurch gekennzeichnet, dass**
das Spannband (26) mit dem Luftsack vernäht ist.

3. Luftsackmodul nach Anspruch 1 oder 2,
**dadurch gekennzeichnet, dass**
die Spannvorrichtung ein Umlenkelement (32) und ein Spannelement (34) aufweist.

4. Luftsackmodul nach Anspruch 3,
**dadurch gekennzeichnet, dass**
das Umlenkelement (32) und das Spannelement (34) jeweils gekrümmte Schalen sind, die insbesondere eine annähernd gleiche Krümmung aufweisen.

5. Luftsackmodul nach Anspruch 3 oder 4,
**dadurch gekennzeichnet, dass**
das Umlenkelement (32) eine Durchtrittsöffnung (36) für das Spannband aufweist.

6. Luftsackmodul nach einem der Ansprüche 3 bis 5,
**dadurch gekennzeichnet, dass**
das Spannband (26) durch eine Durchtrittsöffnung (36) des Umlenkelementes (32) geführt ist und zumindest an der Außenmantelfläche des Spannelementes (34) anliegt.

7. Luftsackmodul nach einem der Ansprüche 3 bis 6,
**dadurch gekennzeichnet, dass**
das Spannelement (34) und/oder das Umlenkelement (32) mit Befestigungsmitteln zum Befestigen an einem fahrzeugfesten Bauteil versehen ist/ sind.

8. Luftsackmodul nach zumindest einem der vorstehenden Ansprüche,
**dadurch gekennzeichnet, dass**
der Gasgenerator (14) zumindest einen Befestigungsbolzen (18, 20) aufweist, und dass die Spannvorrichtung mit Hilfe des Befestigungsbolzens (18, 20) in Richtung des Gasgenerators (14) gespannt ist.

9. Luftsackmodul nach zumindest einem der vorstehenden Ansprüche,
**dadurch gekennzeichnet, dass**
der Gasgenerator (14) einen im Wesentlichen zylindrischen Grundkörper aufweist, und dass sich die Spannvorrichtung über eine Länge in Längsrichtung des Grundkörpers erstreckt, die mindestens dem Durchmesser des Gasgenerators (14) entspricht.

10. Verfahren zum abgedichteten Befestigen eines Gasgenerators an einem Luftsackmund, wobei der Gasgenerator vollständig außerhalb des Luftsacks angeordnet wird und ein im Bereich des Luftsackmundes mit dem Luftsack verbundenes Spannband aus flächigem Gewebe- und/oder Kunststoffmaterial mittels einer Spannvorrichtung um den Gasgenerator gespannt wird, um den Luftsackmund abgedichtet gegen einen Gasaustrittsbereich des Gasgenerators zu drücken.

## Claims

1. Air bag module, comprising
an airbag (10) with an air bag opening (12); and
a gas generator (14) with a gas outlet area (22), disposed completely outside the airbag (10), wherein the airbag (10) comprises a tightening strap (26) in the area of the air bag opening (12), which is stretched around the gas generator (14) by means of a tensioning device, to press the air bag opening (12) sealingly against the gas outlet area (22),
**characterized in that**
the tightening strap (26) consists of laminar fabric and/or plastic material, connected with the airbag.

2. Air bag module according to claim 1,
**characterized in that**
the tightening strap (26) is sewn together with the air bag.

3. Air bag module according to claim 1 or 2,
**characterized in that**
the tensioning device comprises a deflecting element (32) and a tensioning element (34).

4. Air bag module according to claim 3,
**characterized in that**
the deflecting element (32) and the tensioning element (34) are bent shells, respectively, which in particular exhibit a nearly equal bend.

5. Air bag module according to claim 3 or 4,
**characterized in that**
the deflecting element (32) comprises a passage opening (36) for the tightening strap.

6. Air bag module according to one of the claims 3 to 5,
**characterized in that**
the tightening strap (26) is guided through a passage opening (36) of the deflecting element (32) and abuts at least at the outer surface area of the tensioning element (34).

7. Air bag module according to one of the claims 3 to 6,
**characterized in that**
the tensioning element (34) and/or the deflecting element (32) is provided with fastening means for fastening to a vehicle-fixed component.

8. Air bag module according to at least one of the preceding claims,
**characterized in that**
the gas generator (14) comprises at least one mounting bolt (18, 20), and that the tensioning device is stretched toward the gas generator (14) by means of the mounting bolt (18, 20).

9. Air bag module according to at least one of the preceding claims,
**characterized in that**
the gas generator (14) is provided with an essentially cylindrical base body, and that the tensioning device extends over a length in longitudinal direction of the base body, which corresponds at least to the diameter of the gas generator (14).

10. Method for sealingly fastening a gas generator to an air bag opening, wherein the gas generator is disposed completely outside the airbag and a tightening strap, connected to the air bag in the area of the air bag opening, of laminar fabric and/or plastic material is stretched by means of a tensioning device around the gas generator, to press the air bag opening sealingly against a gas outlet area of the gas generator.

## Revendications

1. Module de coussin gonflable, comprenant :
un coussin gonflable (10) avec une embouchure de coussin (12) ; et
un générateur de gaz (14), présentant une zone de sortie de gaz (22), lequel est agencé entièrement à l'extérieur du coussin gonflable (10),
ledit coussin gonflable (10) présentant, dans la zone de l'embouchure de coussin (12), une bande de tensionnement (26) qui est tendue au moyen d'un dispositif de tensionnement autour du générateur de gaz (14), afin de presser l'embouchure de coussin (12) de façon étanche contre la zone de sortie de gaz (22),
**caractérisé en ce que** la bande de tensionnement (26) est réalisée en une matière textile et/ou en une matière plastique surfacique, qui est reliée au coussin gonflable.

2. Module de coussin gonflable selon la revendication 1,
**caractérisé en ce que** la bande de tensionnement (26) est cousue avec le coussin gonflable.

3. Module de coussin gonflable selon la revendication 1 ou 2,
**caractérisé en ce que** le dispositif de tensionnement comprend un élément de renvoi (32) et un élément de tensionnement (34).

4. Module de coussin gonflable selon la revendication 3,
**caractérisé en ce que** l'élément de renvoi (32) et l'élément de tensionnement (34) sont respectivement des coques incurvées, qui présentent en particulier une courbure approximativement égale.

5. Module de coussin gonflable selon la revendication 3 ou 4,
**caractérisé en ce que** l'élément de renvoi (32) comporte une ouverture de traversée (36) pour la bande de tensionnement.

6. Module de coussin gonflable selon l'une des revendications 3 à 5,
**caractérisé en ce que** la bande de tensionnement (26) est guidée à travers une ouverture traversante (36) de l'élément de renvoi (32) et s'applique au moins contre la surface enveloppe extérieure de l'élément de tensionnement (34).

7. Module de coussin gonflable selon l'une des revendications 3 à 6,
**caractérisé en ce que** l'élément de tensionnement (34) et/ou l'élément de renvoi (32) est/sont pourvus de moyens de fixation pour la fixation sur un composant solidaire d'un véhicule.

8. Module de coussin gonflable selon l'une au moins des revendications précédentes,
**caractérisé en ce que** le générateur de gaz (14) comprend au moins un boulon de fixation (18, 20), et **en ce que** le dispositif de tensionnement est tendu en direction du générateur de gaz (14) à l'aide du boulon de fixation (18, 20).

9. Module de coussin gonflable selon l'une au moins des revendications précédentes,
**caractérisé en ce que** le générateur de gaz (14) comprend un corps de base sensiblement cylindrique, et **en ce que** le dispositif de tensionnement s'étend en direction longitudinale du corps de base sur une longueur qui correspond au moins au diamètre du générateur de gaz (14).

10. Procédé pour fixer de façon étanche un générateur de gaz sur une embouchure d'un coussin gonflable, dans lequel le générateur de gaz est entièrement agencé à l'extérieur du coussin gonflable, et une bande de tensionnement, reliée au coussin gonflable dans la région de l'embouchure de coussin, réalisée en une matière textile et/ou une matière plastique surfacique, est tendue autour du générateur de gaz au moyen d'un dispositif de tensionnement, afin de presser l'embouchure du coussin de façon étanche contre une zone de sortie de gaz du générateur de gaz.
